# EUROPÄISCHE PATENTSCHRIFT

(11) **EP 1 998 987 B1**
(45) Veröffentlichungstag und Bekanntmachung des Hinweises auf die Patenterteilung: **27.04.2011**
(21) Anmeldenummer: 07723446.6
(22) Anmeldetag: 21.03.2007
(51) Int. Cl.: B60S 1/52

(54) **WISCHBLATT**
WIPER BLADE
ESSUIE-GLACE

(30) Priorität: 25.03.2006 DE 102006013900
(43) Veröffentlichungstag der Anmeldung: 10.12.2008
(73) Patentinhaber: Valeo Systèmes d'Essuyage, 78321 La Verrière (FR)
(72) Erfinder: EGNER-WALTER, Bruno, 74076 Heilbronn (DE); SCHÄUBLE, Michael, 71665 Vaihingen/Enz (DE)
(74) Vertreter: Rosolen-Delarue, Katell
(86) Internationale Anmeldenummer: PCT/EP2007/002486
(87) Internationale Veröffentlichungsnummer: WO 2007/110177

(56) Entgegenhaltungen:
- EP-A1- 0 724 993
- DE-A1- 2 304 501
- DE-A1- 10 000 372
- FR-A1- 2 648 771
- US-A- 3 531 817
- US-A- 5 944 910

## Beschreibung

Die Erfindung bezieht sich auf ein Wischblatt und dabei insbesondere auf ein flaches Wischblatt für eine Wischvorrichtung zum Reinigen von Scheiben an Fahrzeugen, beispielsweise zum Reinigen von Fahrzeugfrontscheiben gemäß Oberbegriff des Patentanspruchs 1. Ein derartiges Wischblatt ist aus der US 3,531,817 A bekannt. Weiterhin ist es zur Verbesserung der Reinigung von Fahrzeugscheiben aus der DE 100 00 372 A1 bekannt, in Wischblättern wenigstens einen sich in Richtung einer Wischblattlängsachse erstreckenden Spritzkanal vorzusehen, der mit einer Vielzahl von Spritzöffnungen versehen ist. Über diese kann beim Betätigen der Scheibenwaschanlage eine Wasch- oder Reinigungsflüssigkeit (im einfachsten Fall Wasser oder aber Wasser mit Reinigungs- und/oder Gefrierschutzzusätzen) auf die zu reinigende Fahrzeugscheibe ausgebracht werden, und zwar beispielsweise in unmittelbarer Nähe der von dem Wischgummi bzw. der gummielastischen Wischleiste gebildeten Wischlippe.

Zum Zuführen der Wasch- und Reinigungsflüssigkeit ist der Spritzkanal im bekannten Fall an einem Ende des flachen Wischblattes mit einer äußeren Schlauchleitung verbunden. Nachteilig hierbei ist, dass sich die Schlauchleitung ausgehend von dem Wischarm der Wischvorrichtung über eine relativ große freiliegende Länge erstreckt, die nicht nur durch den Abstand des betreffenden Wischblattendes vom Wischarm bei gegen die Fahrzeugscheibe anliegendem Wischblatt bestimmt ist, sondern auch durch die Krümmung, die das Wischblatt bei von der Fahrzeugscheibe weggeklapptem Wischarm aufweist. Diese freiliegende Schlauchlänge ist zumindest optisch störend, kann aber auch z. B. in Autowaschanlagen sehr schnell beschädigt werden.

Vorgeschlagen wurde auch bereits (DE 10 2004 056 835.9), den Adapter, mit dem das Wischblatt mit dem Wischarm verbunden ist, als Anschluss- und Verteilerelement auszubilden, über welches die wenigstens eine äußere Leitung zum Zuführen der Wasch- oder Reinigungsflüssigkeit mit dem im Wischblatt ausgebildeten Spritzkanal verbunden ist. Dies bedeutet allerdings eine spezielle konstruktive Ausgestaltung des Adapters.

Aus der FR 2 648 771 A1 ist weiterhin ein Adapter an einem flachen Wischblatt bekannt, der zwischen zwei Spritzkanälen angeordnet ist.

Aufgabe der Erfindung ist es, das aus der US 3,531,817 A bekannte Wischblatt derart weiterzubilden, dass eine verbesserte Aerodynamik des Wischblatts erziet wird. Diese Aufgabe wird bei einem Wischblatt mit den Merkmalen des Anspruchs 1 gelöst. In den Unteransprüchen sind vorteilhafte Weiterbildungen des erfindungsgemäßen Wischblatts angeführt.

Die Erfindung wird im Folgenden anhand der Figuren an Ausführungsbeispielen näher erläutert. Es zeigen:
- Fig. 1: in vereinfachter Darstellung und in Seitenansicht einen Wischarm zusammen mit einem Wischblatt gemäß der Erfindung;
- Fig. 2 und 3: in perspektivischen Teildarstellungen das Wischblatt im Bereich des Adapters und des benachbarten Anschlusses für die Spritzflüssigkeit;
- Fig. 4: in Einzeldarstellung ein T-Stück zur Verwendung bei dem Anschluss der Figuren 2 und 3;
- Fig. 5 und 6: in Teildarstellung und in Seitenansicht sowie in Draufsicht das Wischblatt der Figuren 2 und 3, wiederum im Bereich des Adapters sowie des Anschlusses für die Spritzflüssigkeit;
- Fig. 7 und 8: Schnitte entsprechend den Linien A - A bzw. B - B;
- Fig. 9 - 11: die Ausbildung des Wischblattes im Bereich einer für die Montage des Adapters vorgesehenen Ausnehmung in perspektivischer Darstellung, in Seitenansicht sowie im Schnitt entsprechend der Linie C - C;
- Fig. 12 und 13: in Darstellungen ähnlich den Figuren 2 und 3 eine weitere Ausführungsform des erfindungsgemäßen Wischblattes;
- Fig. 14 und 15: in Stirnansicht sowie in Draufsicht einen Anschluss mit integrierter Blende zur Verwendung bei dem Wischblatt der Figuren 12 und 13;
- Fig. 16 und 17: das Wischblatt der Figuren 12 und 13 in Teildarstellung und in Seitenansicht sowie Draufsicht;
- Fig. 18 und 19: Schnitte entsprechend den Linien D - D bzw. E - E;
- Fig. 20 und 21: Schnitte durch Wischblätter entsprechend weiterer Ausführungsformen der Erfindung.

In den Figuren ist 1 ein Wischarm einer Scheibenwischeranordnung für Fahrzeugfrontscheiben mit dem üblichen Aufbau, d. h. bestehend aus einem Lagerelement 2, mit dem der Wischarm mit einem Ende an der durch die Linie 2.1 angedeuteten Wischwelle eines nicht dargestellten, dem Fachmann bekannten Scheibenwischerantriebs befestigbar ist, sowie aus dem Wischarmelement 3 (Wischarmstange), welches an einem Ende über ein Gelenk 4 mit dem Lagerelement 2 gelenkig verbunden und an dem anderen Ende mit einem Anschlussstück 5 (Reiter) versehen ist, an welchem das Wischblatt 6 abnehmbar befestigt ist.

Für die Befestigung am Anschlussstück 5 weist das Wischblatt 6 einen als Formteil aus Kunststoff hergestellten Adapter 7 auf, der z.B. von dem Anschlussstück 5 reiterartig übergriffen wird. Die Verbindung des Anschlussstückes 5 mit dem Adapter 7 erfolgt im einfachsten Fall durch einen am Anschlussstück 5 vorgesehenen und in eine Öffnung 7.1 des Adapters 7 eingreifenden Verbindungsbolzen.

Das Wischblatt 6 ist an seinen beiden Längsseiten mit jeweils einem Spritzkanal 8 bzw. 9 für eine auf die Fahrzeugscheibe auszubringende Spritz- oder Reinigungsflüssigkeit (Wasser gegebenenfalls mit reinigenden Zusätzen und/oder Gefrierschutzmitteln) versehen. Jeder Spritzkanal 8 bzw. 9 bildet eine Vielzahl von Austritts- oder Spritzöffnungen 8.1 bzw. 9.1, die an jeder Längsseite des Wischblattes 6 verteilt vorgesehen sind. Zum Zuführen der Spritz- oder Reinigungsflüssigkeit an die Spritzkanäle 8 und 9 dienen zwei äußere Schlauchleitungen 10 und 11, die entlang des Wischarmes 1 geführt sind, mit einem Ende über Anschlussstücke eines Anschlusses 12 mit dem jeweiligen Spritzkanal 8 bzw. 9 und mit dem anderen Ende mit einer im Fahrzeug vorgesehenen Quelle verbunden sind, die die Reinigungsflüssigkeit gesteuert und unter Druck zur Verfügung stellt. Der Anschluss 12 ist also als Doppelanschluss für zwei äußere Schlauchleitungen 10 und 11 ausgebildet.

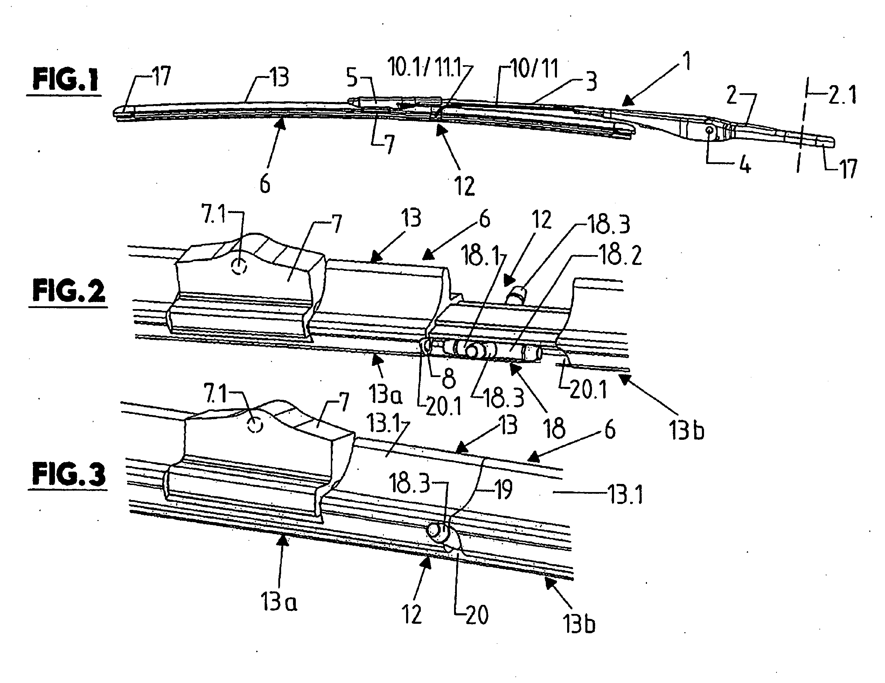

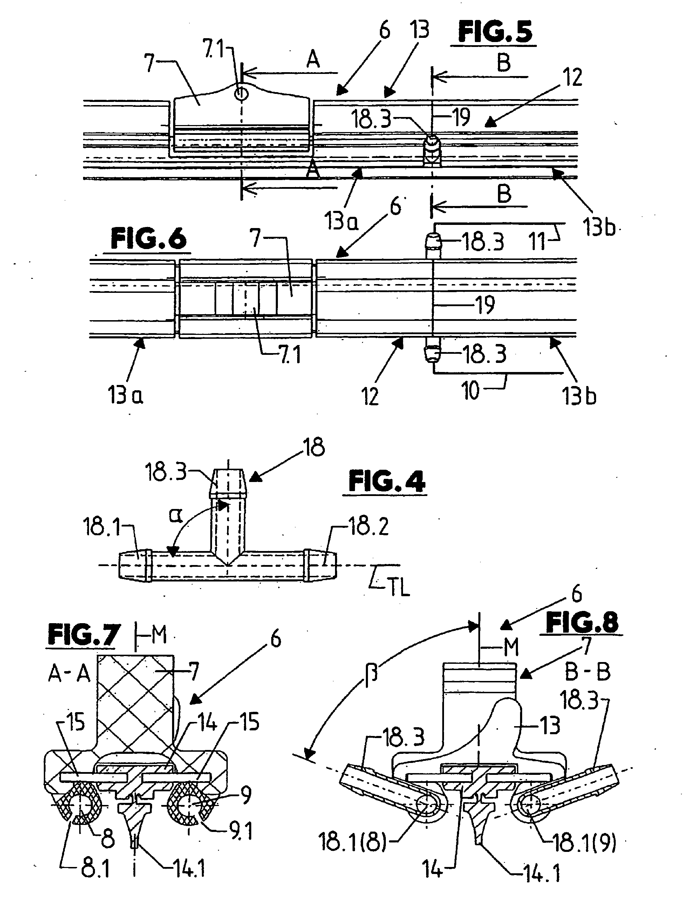

Wie insbesondere auch die Figuren 2 - 11 zeigen ist das Wischblatt 6 als flaches Wischblatt ausgebildet. Es besteht im Wesentlichen aus einem leistenartigen Wischblattkörper 13, der aus einem für derartige Wischblattkörper oder -elemente geeigneten Material, beispielsweise aus einem leicht elastischen Kunststoff gefertigt und an seiner der Fahrzeugscheibe abgewandten Oberseite bei 13.1 als Spoiler geformt ist. In dem Wischblattkörper 13 sind auch die beiden Verteiler- oder Spritzkanäle 8 und 9 und die zugehörigen Düsenöffnungen 8.1 und 9.1 vorgesehen.

Das Wischblatt 6 besteht weiterhin aus dem aus einem gummielastischen Material, beispielsweise aus Gummi oder einem elastomeren Kunststoff hergestellten

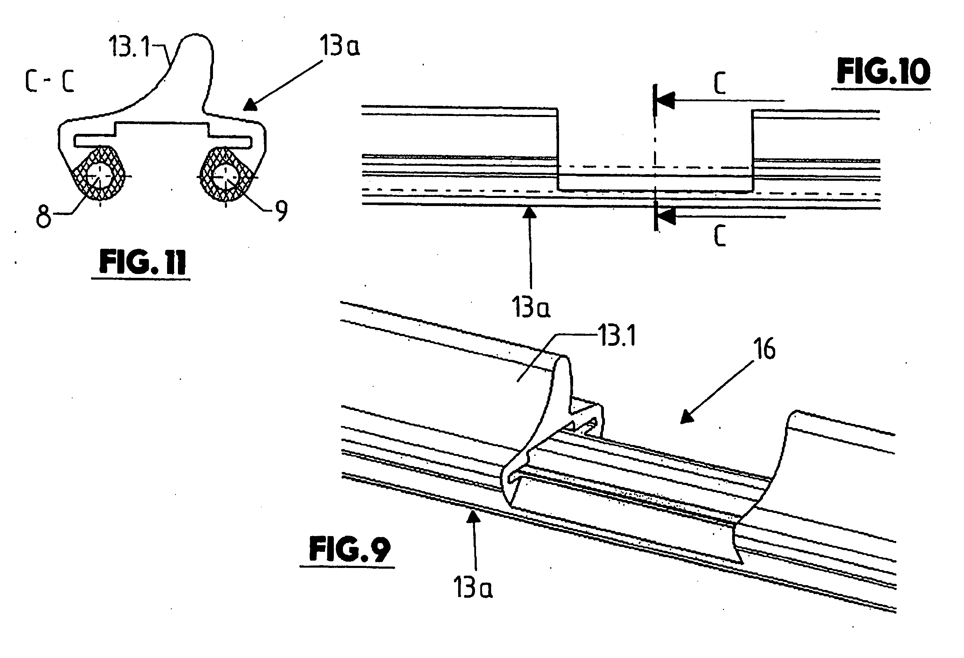

Wischgummi 14, welcher die gegen die Fahrzeugscheibe anliegende Wischlippe 14.1 bildet, sowie aus den beiden, jeweils an einer Längsseite des Wischgummis 14 vorgesehenen Federschienen 15. Diese sind mit einem Teil ihrer Breite im Wischgummi 14 aufgenommen und greifen mit einem über die jeweilige Wischgummi-Längsseite vorstehenden Teil ihrer Breite in einer Nut des die Federschienen 15 und den Wischgummi übergreifenden Wischblattkörpers 13 ein. Der Wischblattkörper 13 ist bei 16 für den Adapter 7 passend ausgespart, und zwar derart, dass im Bereich dieser Aussparung der obere, den Spoiler 13.1 bildende Profilabschnitt des Wischblattkörpers 13 unterbrochen ist und die beiden Federschienen an ihrem aus dem Wischgummi 14 seitlich wegstehenden Abschnitt freiliegen, sodass der Adapter 7 den Wischgummi 14 an seiner der Wischlippe 14.1 abgewandten Oberseite sowie die im Bereich der Aussparung 16 freiliegenden Federschienen 15 reiterartig übergreift, die zur Halterung des Adapters 7 in nutenartigen Ausnehmungen des Adapters aufgenommen sind. Wie insbesondere die Figuren 9 - 11 zeigen, ist die Aussparung 16 so ausgebildet, dass durch sie die Spritzkanäle 8 und 9 nicht unterbrochen werden. Mit M ist in den Figuren eine Mittelebene bezeichnet, die die Längsachse des Wischblattes 6 einschließt und zu der zumindest der Wischgummi 14, einschließlich Wischlippe 14.1 symmetrisch ausgebildet ist und die bei montiertem Wischarm 1 und Wischblatt 6 senkrecht oder in etwa senkrecht zur Fahrzeugscheibe orientiert ist.

Der Wischblattkörper 13, der Wischgummi 14 und die beiden Federschienen 15 erstrecken sich jeweils über die gesamte oder nahezu die gesamte Länge des Wischblattes 6. An den beiden Enden ist das Wischblatt 6 mit jeweils einer als Formteil aus Kunststoff hergestellten Kappe 17 versehen, die den Wischblattkörper 13, den Wischgummi 14 und die Federschienen 15 zusammenhält und als Abschlussstück auch die beiden Spritzkanäle 8 und 9 dicht verschließt.

Eine Besonderheit des Wischblattes 6 besteht darin, dass der Anschluss 12, der die Spritzkanäle 8 und 9 mit den Leitungen 10 und 11 verbindet, seitlich vom Adapter 7, d. h. zwischen diesem und einem Ende des Wischblattes 6 vorgesehen ist, und zwar bei der dargestellten Ausführungsform zwischen dem Adapter 7 und dem der Wischwelle 2.1 näher liegenden Wischblattende. Der Abstand, den der Anschluss 12 vom Adapter 7 aufweist, ist wesentlich kleiner als der Abstand zwischen dem Anschluss 12 und dem wischwellenseitigen Ende des Wischblattes 6.

Ein besonderer Vorteil dieser Ausbildung besteht darin, dass bei kurzen freien, d.h. nicht am Wischarm 1 geführten Teillängen 10.1 bzw. 11.1 der Schlauchleitungen 10 bzw. 11 und bei einfacher Ausführung des Adapters 7 die Versorgung mit der Spritz- und Reinigungsflüssigkeit nicht über den Bereich des Anschlussstückes 5 und des Adapters 7 erfolgen muss.

Bei dem Wischblatt 6 weist der Anschluss 12 als Anschlussstücke zwei T-Stücke 18 mit jeweils drei Anschlussstutzen 18.1, 18.2 und 18.3 auf, von denen die achsgleich miteinander sowie achsgleich mit einer T-Stücklängsachse TL angeordneten Anschlussstutzen 18.1 und 18.2 ein durchgehendes, beidendig offenes Rohr- oder Verbindungsstück bilden und der Anschlussstutzen 18.3 mit seiner Längssachse einen Winkel α mit der T-Stücklängsachse TL einschließt. Der Winkel α beträgt bei der dargestellten Ausführungsform 90°, kann hiervon aber auch abweichen, d. h. größer oder kleiner 90° sein.

Dort, wo der Anschluss 12 bzw. dessen T-Stücke 18 vorgesehen sind, ist der Wischblattkörper 13 geteilt, so dass er zwei Wischarmabschnitte 13a und 13b bildet. An der Trennebene 19 die senkrecht zur Längserstreckung des Wischblattes 6 orientiert ist, ist an beiden Längsseiten des Wischblattes 6 jeweils ein T-Stück 18 vorgesehen, und zwar derart, dass die beiden Anschlussstutzen 18.1 und 18.2 jeweils in die an die Trennebene 19 anschließenden Teillängen des Spritzkanals 8 bzw. 9 eingreifen und der Anschlussstutzen 18.3 seitlich über die betreffende Längsseite des Wischblattes wegsteht, und zwar derart, dass die Anschlussstutzen 18.3 der beiden T-Stücke mit der Mittelebene M jeweils einen Winkel β einschließen, der sich zu der der Wischlippe 14.1 abgewandten Oberseite des Wischblattes 6 öffnet und kleiner als 90° ist.

Damit die beiden Abschnitte 13a und 13b des Wischblattkörpers 13 im vollständig montierten Zustand des Wischblattes 6 im Bereich der Trennebene 19 dicht aneinander anschließen, sind diese Abschnitte dort mit jeweils einer Aussparung 20.1 versehen, die einen Freiraum 20 für den Anschlussstutzen 18.3 schaffen, aus welchem dieser Anschlussstutzen mit seinem mit der jeweiligen Schlauchleitung 10 bzw. 11 zu verbindenden Ende vorsteht.

Die Montage des Adapters 7 erfolgt im Bereich der Aussparung 16 durch Aufschieben des mit diesem Adapter versehenen Abschnittes 13a auf die am Wischgummi 14 vormontierten Federschienen 15.

Die Montage des Anschlusses 12 erfolgt so, dass die zunächst noch voneinander beabstandeten, jedoch bereits auf den Federschienen 15 und dem Wischgummi 14 montierten Abschnitte 13a und 13b bei zwischen diesen Abschnitten angeordneten T-Stücken 18 zusammengeschoben werden, so dass bei diesem Zusammenschieben die Anschlussstutzen 18.1 und 18.2 in die Spritzkanäle 8 bzw. 9 eingeführt werden und die Anschlussstutzen 18.3 über jeweils eine Wischblattlängsseite vorstehen.

Die Montage des Wischblattes 6 wird durch Aufsetzen der Kappen 17 an den beiden Wischblattenden abgeschlossen.

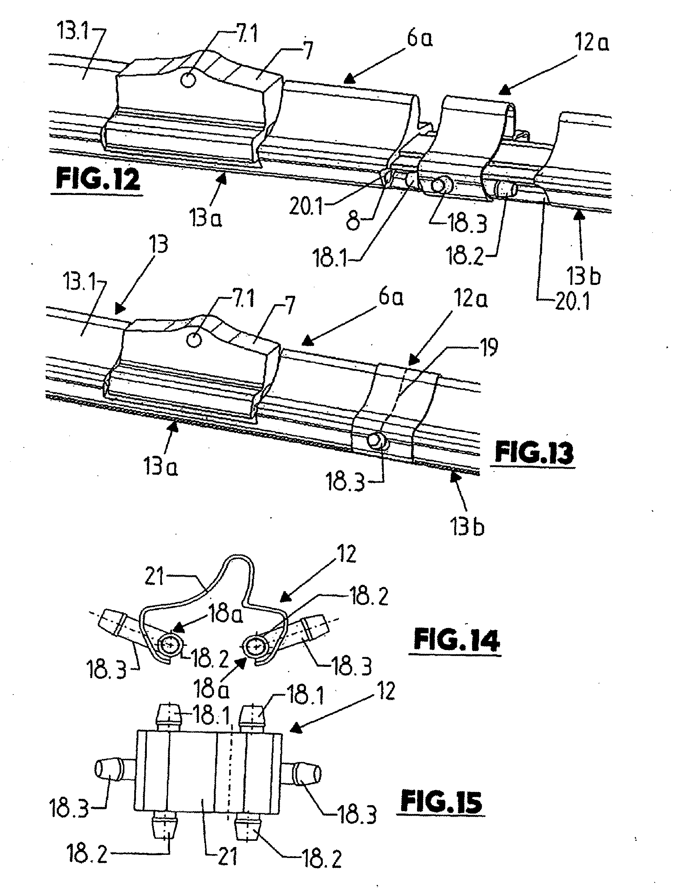

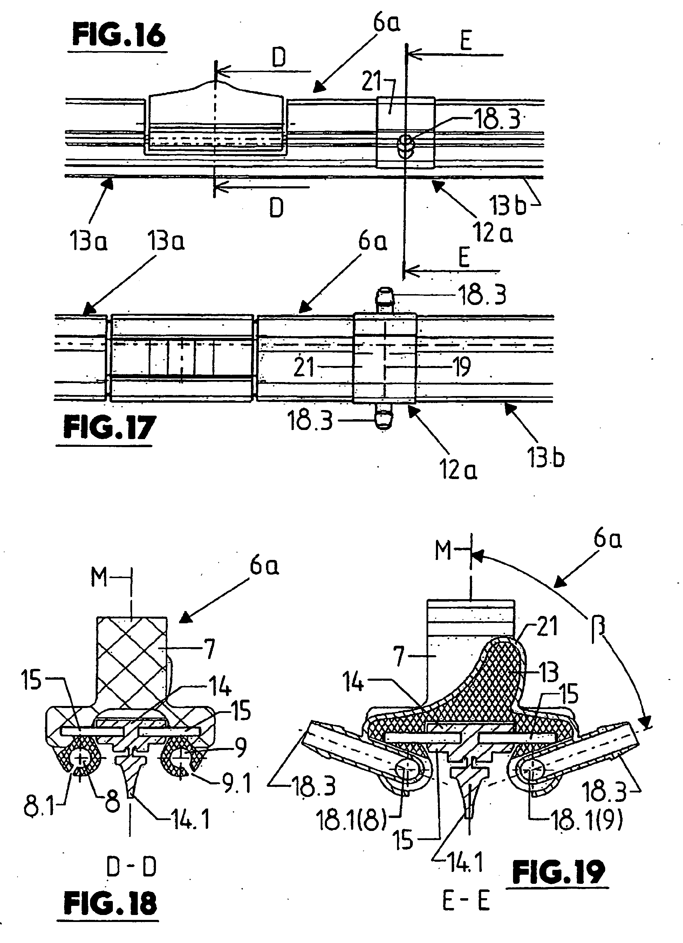

Die Figuren 12 - 19 zeigen als weitere Ausführungsform ein Wischblatt 6a, welches sich vom Wischblatt 6 lediglich dadurch unterscheidet, dass anstelle des Anschlusses 12 mit zwei getrennten T-Stücken 18 ein Anschluss 12a vorgesehen ist, an welchem den T-Stücken 18 entsprechende T-Stücke 18a an einer Blende 21. vorgesehen bzw. einstückig mit dieser als Formteil aus Kunststoff gefertigt sind. Die dünnwandige Blende 21 besitzt an der Außenfläche und an der Innenfläche eine Kontur, die an die Kontur des Außenquerschnitts des Wischblattkörpers 13 so angepasst ist, dass die Blende 21 passend auf die Enden der beiden Abschnitte 13a und 13b aufgeschoben werden kann, und zwar derart, dass sie bei montiertem Wischblatt 6a die Trennebene 19 bzw. die von dieser gebildete Fuge vollständig abdeckt.

Die Montage des Anschlusses 12a erfolgt auch bei dieser Ausführung entsprechend den Figuren 12 und 13 so, dass die beiden zunächst voneinander beabstandeten, jedoch bereits auf den Federschienen 15 und dem Wischgummi 14 montierten Abschnitte 13a und 13b durch Zusammenschieben mit dem Anschluss 12a verbunden werden. Bei diesem Zusammenschieben werden die Anschlussstutzen 18.1 und 18.2 in die Spritzkanäle 8 bzw. 9 eingeführt. Nach dem Zusammenschieben der Abschnitte 13a und 13b schließen diese an der Trennebene 19 dicht aneinander an. Die Trennebene 19 ist durch die Blende 21 abgedeckt.

Auch bei dieser Ausführungsform sind die Anschlussstutzen 18.3 so orientiert, dass sie mit der Mittelebene M wiederum den Winkel β einschließen. Weiterhin sind die beiden Abschnitte 13a und 13b zur Schaffung des Freiraumes 20 für den Anschlussstutzen 18.3 mit den Aussparungen 20.1 versehen.

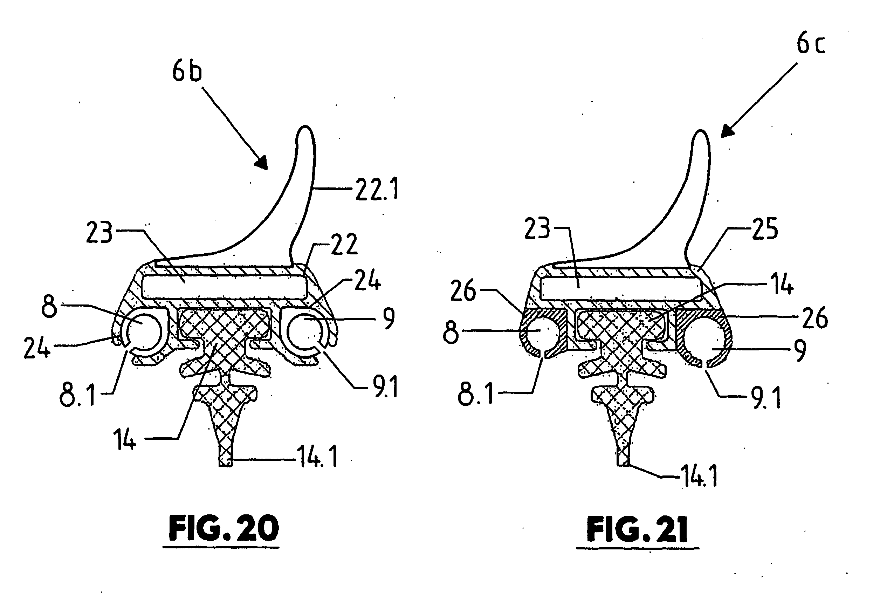

Die Figur 20 zeigt als weitere Ausführung ein Wischblatt 6b, bei dem anstelle des Wischblattkörpers 13 ein Wischblattkörper 22 verwendet ist, der als Profil aus einem geeignetem Material, beispielsweise aus Kunststoff hergestellt ist und den Wischgummi an seiner der Wischlippe 14.1 abgewandten Oberseite formschlüssig umgreift. Der Wischblattkörper 22 umschließt eine einzige Federschiene 23, die sich oberhalb des Wischgummis im Wischblattkörper 22 befindet. An der der Wischlippe 14.1 abgewandten Oberseite ist am Wischblattkörper 22 ein Spoilerprofil 22.1 befestigt. An den beiden Längsseiten des Wischblattkörpers 22 ist durch Einklipsen ein den jeweiligen Spritzkanal 8 bzw. 9 mit den Austrittsöffnungen 8.1 und 9.1 bildendes Rohrprofil 24 befestigt. Der Anschluss zu den äußeren Schlauchleitungen 10 und 11 ist auch bei dem Wischblatt 6b beispielsweise in der Form realisiert, wie es für das Wischblatt 6 oder 6a beschrieben wurde.

Die Figur 21 zeigt einen Querschnitt durch ein Wischblatt 6c, welches sich von dem Wischblatt 6b im Wesentlichen dadurch unterscheidet, dass an jeder Längsseite des dem Wischblattkörper 22 entsprechenden Wischblattkörpers 25 anstelle der Rohrprofile 24 Rohrprofile 26 vorgesehen sind, die jeweils einen Spritzkanal 8 bzw. 9 mit den zugehörigen Spritz- oder Austrittsöffnungen 8.1 und 9.1 bilden und die durch Kleben oder Verschweißen oder auf andere geeignete Weise an dem Wischblattelement 25 gehalten sind.

Die Erfindung wurde voranstehend an Ausführungsbeispielen beschrieben. Es versteht sich, dass zahlreiche Änderungen sowie Abwandlungen möglich sind, ohne das dadurch der die Erfindung tragende Gedanke verlassen wird. So ist es beispielsweise möglich, das jeweilige Wischblattelement 13 bzw. 22 oder 25 mit den Spritzkanälen 8 und 9 über die gesamte Länge des Wischblattes durchgehend auszubilden und den jeweiligen Anschluss zu den Spritzkanälen 8 und 9 dadurch herzustellen, dass der Wischblattkörper beispielsweise nach der Montage z.B. durch Einstechen, Ausstanzen usw. mit einer in den jeweiligen Spritzkanal 8 bzw. 9 mündenden Öffnung versehen und in diese dann anschließend ein die Verbindung mit der äußeren Schlauchleitung 10 bzw. 11 ermöglichender Anschlussstutzen eingebracht und verankert wird, z. B. durch Kleben, Schweißen, Verrasten usw.

### Bezugszeichenliste

- 1: Wischarm
- 2: Lagerelement
- 2.1: Achse der Wischwelle
- 3: Wischarmelement oder Wischarmstange
- 4: Gelenk
- 5: Anschlussstück oder Reiter
- 6, 6a, 6b, 6c: Wischblatt
- 7: Adapter
- 7.1: Adapteröffnung
- 8, 9: Verteiler- oder Spritzkanal
- 8.1, 9.1: Spritzöffnung
- 10, 11: Schlauchleitung freiliegende Teillänge der Schlauchleitung 10 bzw. 11
- 12, 12a: Anschluss
- 13: Wischblattkörper
- 13a, 13b: Abschnitt des Wischblattkörpers
- 13.1: Spoiler
- 14: Wischgummi
- 14.1: Wischlippe
- 15: Federschiene
- 16: Aussparung für Adapter 7
- 17: Kappe
- 18, 18a: T-Stück
- 18.1, 18.2_{,} 18.3: Anschlussstutzen
- 19: Trennebene
- 20: Freiraum
- 20.1: Ausnehmung
- 21: Blende
- 22: Wischblattkörper
- 22.1: Spoiler
- 23: Federschiene
- 24: Rohrprofil
- 25: Wischblattkörper
- 26: Rohrprofil

- M: Mittelebene
- TL: T-Stücklängsachse
- α, β: Winkel

## Patentansprüche

1. Wischblatt, insbesondere flaches Wischblatt, zum Reinigen von Schreiben an Fahrzeugen, insbesondere Fahrzeugfrontscheiben, mit wenigstens einem Spritzkanal (8, 9) mit Spritzöffnungen (8.1, 9.1) an wenigstens einer Wischblattlängsseite zum Ausbringen einer Wasch- oder Reinigungsflüssigkeit auf die zu reinigende Schreibe, mit wenigstens einem Anschluss (12, 12a) zum Anschließen des wenigstens einen Spritzkanal (8,9) an wenigstens eine äußere Leitung (10, 11) zum Zuführen der Wasch- oder Reinigungsflüssigkeit, sowie mit wenigstens einem Adapter (7) zum Verbinden des Wischblattes (6, 6a, 6b, 6c, 6d) mit einem Wischerarm (1) einer Wischvorrichtung, wobei der wenigstens eine Anschluss (12, 12a) zwischen dem Adapter (7) und einem Wischblattende vorgesehen ist, **dadurch gekennzeichnet, dass** der wenigstens eine Spritzkanal (8, 9) in einem leistenartigen Wischblattkörper (13) ausgebildet ist, und wobei der Wischblattkörper (13) aus zwei Abschnitten (13a, 13b) besteht, die an dem wenigstens einen Anschluss (12, 12a) aneinander anschließen, wobei das wenigstens eine Anschlusselement (18, 18a) zumindest teilweise zwischen den aneinander anschließenden Wischblattabschnitten (13a, 13b) und in Ausnehmungen (20.1) angeordnet ist, die an den einander benachbarten Seiten der aneinander anschließenden Wischblattabschnitte (13a, 13b) gebildet sind.

2. Wischblatt nach Anspruch 1, **gekennzeichnet durch** eine den Anschlussbereich zwischen den Wischblattkörperabschnitten (13a, 13b) abdeckende Blende (21).

3. Wischblatt nach Anspruch 2, **dadurch gekennzeichnet, dass** die Blende (21) Teil des wenigstens einen Anschlusses (12a) ist und/oder einstückig mit dem Anschlusselement (18a) des wenigstens einen Anschlusses (12a) gefertigt ist.

4. Wischblatt nach einem der vorhergehenden Ansprüche, **dadurch gekennzeichnet, dass** im Wschblattkörper (13) eine Ausnehmung (16) für den Adapter (7) derart vorgesehen ist, dass der wenigstens eine Spritzkanal (8, 9) im Bereich dieser Ausnehmung nicht unterbrochen ist.

5. Wischblatt nach einem der vorhergehenden Ansprüche, **dadurch gekennzeichnet, dass** der wenigstens eine Spritzkanal (8.9) in den Wischblattkörper (13) eingeformt ist.

6. Wischblatt nach einem der vorhergehenden Ansprüche, **dadurch gekennzeichnet, dass** der eine Spritzkanal (8, 9) von einem Rohrstück oder rohrartigen Formstück (24, 26) gebildet ist, welches an der wenigstens einen Längsseite des Wischblattes (6b, 6c) befestigt ist, beispielsweise durch Kleben, Klipsen, Verschweißen.

7. Wischblatt nach einem der vorhergehenden Ansprüche, **dadurch gekennzeichnet, dass** auf den Enden des Wischblattes (6, 6a, 6b, 6c) jeweils eine Abschlusskappe (17) aufgebracht ist, die auch den wenigstens einen Spritzkanal (8, 9) verschließt.

8. Wischblatt nach einem der vorhergehenden Ansprüche, **dadurch gekennzeichnet, dass** an beiden Längsseiten des Wischblattes jeweils wenigstens ein Spritzkanal (8, 9) vorgesehen ist, der über den Anschluss (12, 12a) mit einer äußeren Leitung (10, 11) verbunden ist und die Spritzöffnungen (8.1, 9.1) aufweist

9. Wischblatt nach Anspruch 8, **dadurch gekennzeichnet, dass** die Spritzkanäle (8, 9) an den beiden Wischbfattlängsseiten jeweils an eigenständige äußere Leitungen (10, 11) anschließbar sind.

10. Wischblatt nach Anspruch 8 oder 9, **dadurch gekennzeichnet, dass** der Anschsluss (12, 12a) als Mehrfachanschluss mit wenigstens zwei Anschlussstücken (18, 18a) ausgebildet ist.

11. Wischblatt, nach einem der vorhergehenden Ansprüche, **dadurch gekennzeichnet, dass** der den wenigstens einen Spritzkanal (8, 9) aufweisende Wischblattkörper (13, 22, 25) den Wischgummi (14) an einer der Wischlippe (14.1) abgewandten Oberseite kappen- oder reiterartig umschließt

12. Wischblatt nach Anspruch 11, **dadurch gekennzeichnet, dass** der Wischgummi (14) über wenigstens eine Federschiene (15) mit dem diesen Wischgummi (14) an einer der Wischlippe (14.1) abgewandeten Oberseite kappen oder reiterartig umgreifenden Wischblattkörper (13) gehalten ist

13. Wischblatt nach einem der vorhergehenden Ansprüche, **dadurch gekennzeichnet, dass** der wenigstens eine Anschluss (12, 12a) zwischen dem Adapter (7) und dem einer Wischwelle (2.1) näher liegenden Wischblattende vorgesehen ist.

14. Wischblatt nach einem der vorhergehenden Ansprüche, **dadurch gekennzeichnet, dass** der wenigstens eine Anschluss (12,12a) von dem Wischblattende weiter beabstandet ist als von dem Adapter (7).

15. Wischblatt nach einem der vorhergehenden Ansprüche, **dadurch gekennzeichnet, dass** der wenigstens eine Spritzkanal (8.9) wenigstens zwei Teillängen bildet, die sich jeweils vom Anschluss (12, 12a) in Wischblatttängsrichtung erstrecken.

16. Wischblatt nach Anspruch 15, **dadurch gekennzeichnet, dass** die Teillängen des wenigstens einen Spritzkanals (8, 9) über den wenigstens einen Anschluss (12, 12a) oder ein diesen Anschluss bildendes Anschlusselement (18, 18a) miteinander verbunden sind.

17. Wischblatt nach Anspruch 16, **dadurch gekennzeichnet, dass** das Anschlußstück (18,18a) zur Bildung eines ersten und eines zweiten Anschlussstutzens (18.1, 18.2) für eine Verbindung mit jeweils einer Teillänge des wenigstens einen Spritzkanals (8, 9) rohrstückartig ausgeführt ist, und dass das Anschlussstück (18, 18a) einen seitlich wegstehenden dritten Anschlussstutzen zum Anschließen an die äußere Leitung (10, 11) aufweist.

18. Wischblatt n ach Anspruch 17, **dadurch gekennzeichnet, dass** das Anschlussstück ein T-Stück (18, 18a) ist.

## Claims

1. Wiper blade, in particular a flat wiper blade, for cleaning vehicle windows, in particular vehicle windscreens, comprising at least one spray duct (8, 9) with spray openings (8.1, 9.1) on at least one longitudinal side of the wiper blade for dispensing a washing or cleaning liquid onto the window to be cleaned, comprising at least one port (12, 12a) for connecting the at least one spray duct (8, 9) to at least one external line (10, 11) for supplying the washing or cleaning liquid, and comprising at least one adapter (7) for connecting the wiper blade (6, 6a, 6b, 6c, 6d) to a wiper arm (1) of a wiper device, the at least one port (12, 12a) being provided between the adapter (7) and a wiper blade end, **characterised in that** the at least one spray duct (8, 9) is formed in a strip-like wiper blade body (13), the wiper blade body (13) consisting of two portions (13a, 13b) which are interconnected at the at least one port (12, 12a), the at least one connecting element (18, 18a) being arranged between the interconnected wiper blade portions (13a, 13b), at least in part, and in recesses (20.1) which are formed on the adjacent sides of the interconnected wiper blade portions (13a, 13b).

2. Wiper blade according to claim 1, **characterised by** a cover (21) covering the connection region between the wiper blade body portions (13a, 13b).

3. Wiper blade according to claim 2, **characterised in that** the cover (21) is part of the at least one port (12a) and/or is produced in one piece with the connecting element (18a) of the at least one port (12a).

4. Wiper blade according to any one of the preceding claims, **characterised in that** a recess (16) for the adapter (7) is provided in the wiper blade body (13) in such a way that the at least one spray duct (8, 9) is not interrupted in the region of said recess.

5. Wiper blade according to any one of the preceding claims, **characterised in that** the at least one spray duct (8, 9) is shaped into the wiper blade body (13).

6. Wiper blade according to any one of the preceding claims, **characterised in that** one spray duct (8, 9) is formed of a tube portion or tubular shaped part (24, 26) which is fixed to the at least one longitudinal side of the wiper blade (6b, 6c), for example by gluing, clipping or welding.

7. Wiper blade according to any one of the preceding claims, **characterised in that** an end cap (17) is applied to the ends of the wiper blade (6, 6a, 6b, 6c) in each case, the end cap also closing the at least one spray duct (8, 9).

8. Wiper blade according to any one of the preceding claims, **characterised in that** on both longitudinal sides of the wiper blade at least one spray duct (8, 9) is provided which is connected to an external line (10, 11) by means of the port (12, 12a) and comprises the spray openings (8.1, 9.1).

9. Wiper blade according to claim 8, **characterised in that** the spray ducts (8, 9) on the two longitudinal sides of the wiper blade can each be connected to independent external lines (10, 11).

10. Wiper blade according to either claim 8 or claim 9, **characterised in that** the port (12, 12a) is in the form of a multi-port comprising at least two connecting pieces (18, 18a).

11. Wiper blade according to any one of the preceding claims, **characterised in that** the wiper blade body (13, 22, 25) comprising the at least one spray duct (8, 9) surrounds the wiping rubber (14) in the manner of a cap or a slide on an upper face facing away from the wiping lip (14.1).

12. Wiper blade according to claim 11, **characterised in that** the wiping rubber (14) is held via at least one spring rail (15) with the wiper blade body (13), which surrounds in the manner of the cap or a slide the upper face facing away from the wiping lip (14.1).

13. Wiper blade according to any one of the preceding claims, **characterised in that** the at least one port (12, 12a) is provided between the adapter (7) and the wiper blade end adjacent to a wiper shaft (2.1).

14. Wiper blade according to any one of the preceding claims, **characterised in that** the at least one port (12, 12a) is located further away from the wiper blade end than from the adapter (7).

15. Wiper blade according to any one of the preceding claims, **characterised in that** the at least one spray duct (8, 9) forms at least two partial lengths which each extend from the port (12, 12a) in the longitudinal direction of the wiper blade.

16. Wiper blade according to claim 15, **characterised in that** the partial lengths of the at least one spray duct (8, 9) are connected to one another by the at least one port (12, 12a) or by a connecting element (18, 18a) forming said port.

17. Wiper blade according to claim 16, **characterised in that** the connecting piece (18, 18a) for forming a first and a second connecting pipe (18.1, 18.2) for connecting to one partial length of the at least one spray duct (8, 9) in each case is configured in the form of a tube portion, and **in that** the connecting piece (18, 18a) comprises a laterally projecting third connecting pipe for connecting to the external line (10, 11).

18. Wiper blade according to claim 17, **characterised in that** the connecting piece is a T-piece (18, 18a).

## Revendications

1. Balai d'essuie-glace, notamment balai d'essuie-glace plat, pour le nettoyage de vitres de véhicules, notamment de pare-brise de véhicules, comprenant au moins un conduit de pulvérisation (8, 9) avec des ouvertures de pulvérisation (8.1, 9.1) sur au moins un côté longitudinal du balai d'essuie-glace pour appliquer un liquide de lavage ou de nettoyage sur la vitre à nettoyer, comprenant au moins un raccord (12, 12a) pour raccorder l'au moins un conduit de pulvérisation (8, 9) à au moins une conduite extérieure (10, 11) pour l'alimentation en liquide de lavage ou de nettoyage, et comprenant également au moins un adaptateur (7) pour relier le balai d'essuie-glace (6, 6a, 6b, 6c, 6d) à un bras d'essuie-glace (1) d'un dispositif d'essuie-glace, l'au moins un raccord (12, 12a) étant prévu entre l'adaptateur (7) et une extrémité du balai d'essuie-glace, **caractérisé en ce que** l'au moins un conduit de pulvérisation (8, 9) est réalisé dans un corps de balai d'essuie-glace (13) de type baguette, et le corps de balai d'essuie-glace (13) se composant de deux portions (13a, 13b) qui se raccordent l'une à l'autre au niveau de l'au moins un raccord (12, 12a),
l'au moins un élément de raccord (18, 18a) étant disposé au moins en partie entre les portions de balai d'essuie-glace (13a, 13b) se raccordant l'une à l'autre et dans des évidements (20.1), qui sont formés sur les côtés mutuellement adjacents des portions de balai d'essuie-glace (13a, 13b) qui se raccordent l'une à l'autre.

2. Balai d'essuie-glace selon la revendication 1, **caractérisé par** un écran (21) recouvrant la région de raccord entre les portions de corps de balai d'essuie-glace (13a, 13b).

3. Balai d'essuie-glace selon la revendication 2, **caractérisé en ce que** le écran (21) fait partie de l'au moins un raccord (12a) et/ou est réalisé d'une seule pièce avec l'élément de raccord (18a) de l'au moins un raccord (12a).

4. Balai d'essuie-glace selon l'une quelconque des revendications précédentes, **caractérisé en ce qu'**un évidement (16) pour l'adaptateur (7) est prévu dans le corps de balai d'essuie-glace (13), de telle sorte que l'au moins un conduit de pulvérisation (8, 9) ne soit pas interrompu dans la région de cet évidement.

5. Balai d'essuie-glace selon l'une quelconque des revendications précédentes, **caractérisé en ce que** l'au moins un conduit de pulvérisation (8, 9) est façonné dans le corps de balai d'essuie-glace (13).

6. Balai d'essuie-glace selon l'une quelconque des revendications précédentes, **caractérisé en ce que** l'un des conduits de pulvérisation (8 9) est formé par une pièce tubulaire ou une pièce moulée de type tube (24, 26), qui est fixée sur l'au moins un côté longitudinal du balai d'essuie-glace (6b, 6c), par exemple par collage, enclipsage, ou soudage.

7. Balai d'essuie-glace selon l'une quelconque des revendications précédentes, **caractérisé en ce qu'**un embout de terminaison (17) est appliqué respectivement sur chacune des deux extrémités du balai d'essuie-glace (6, 6a, 6b, 6c), lequel termine aussi l'au moins un conduit de pulvérisation (8, 9).

8. Balai d'essuie-glace selon l'une quelconque des revendications précédentes, **caractérisé en ce qu'**au moins un conduit de pulvérisation (8, 9) est prévu respectivement sur chacun des deux côtés longitudinaux du balai d'essuie-glace, lequel est connecté par le biais du raccord (12, 12a) à une conduite extérieure (10, 11) et présente les ouvertures de pulvérisation (8.1, 9.1).

9. Balai d'essuie-glace selon la revendication 8, **caractérisé en ce que** les conduits de pulvérisation (8, 9) peuvent être raccordés aux deux côtés longitudinaux du balai d'essuie-glace, à chaque fois à des conduites extérieures autonomes (10, 11).

10. Balai d'essuie-glace selon la revendication 8 ou 9, **caractérisé en ce que** le raccord (12, 12a) est réalisé sous forme de raccord multiple avec au moins deux pièces de raccord (18, 18a).

11. Balai d'essuie-glace selon l'une quelconque des revendications précédentes, **caractérisé en ce que** le corps de balai d'essuie-glace (13, 22, 25) présentant l'au moins un conduit de pulvérisation (8, 9) entoure la raclette d'essuie-glace (14) au niveau d'un côté supérieur opposé à la lèvre de balai d'essuie-glace (14.1), à la manière d'un capuchon ou d'un cavalier.

12. Balai d'essuie-glace selon la revendication 11, **caractérisé en ce que** la raclette d'essuie-glace (14) est maintenue par le biais d'au moins un rail élastique (15) avec le corps de balai d'essuie-glace (13) venant en prise autour de cette raclette d'essuie-glace (14) au niveau d'un côté supérieur opposé à la lèvre de balai d'essuie-glace (14.1), à la manière d'un capuchon ou d'un cavalier.

13. Balai d'essuie-glace selon l'une quelconque des revendications précédentes, **caractérisé en ce que** l'au moins un raccord (12, 12a) est prévu entre l'adaptateur (7) et l'extrémité du balai d'essuie-glace la plus proche d'un arbre d'essuie-glace (2.1).

14. Balai d'essuie-glace selon l'une quelconque des revendications précédentes, **caractérisé en ce que** l'au moins un raccord (12, 12a) est plus espacé de l'extrémité du balai d'essuie-glace que de l'adaptateur (7).

15. Balai d'essuie-glace selon l'une quelconque des revendications précédentes, **caractérisé en ce que** l'au moins un conduit de pulvérisation (8, 9) forme au moins deux longueurs partielles, qui s'étendent à chaque fois depuis le raccord (12, 12a) dans la direction longitudinale du balai d'essuie-glace.

16. Balai d'essuie-glace selon la revendication 15, **caractérisé en ce que** les longueurs partielles de l'au moins un conduit de pulvérisation (8, 9) sont reliées l'une à l'autre par le biais de l'au moins un raccord (12, 12a) ou d'un élément de raccord (18, 18a) formant ce raccord.

17. Balai d'essuie-glace selon la revendication 16, **caractérisé en ce que** la pièce de raccord (18, 18a) est réalisée à la manière d'une pièce tubulaire pour former une première et une deuxième tubulure de raccord (18.1, 18.2) pour une connexion à une longueur partielle respective de l'au moins un conduit de pulvérisation (8, 9), et **en ce que** la pièce de raccord (18, 18a) présente une troisième tubulure de raccord saillant latéralement pour le raccordement à la conduite extérieure (10, 11).

18. Balai d'essuie-glace selon la revendication 17, **caractérisé en ce que** la pièce de raccord est une pièce en forme de T (18, 18a).
